# EUROPEAN PATENT APPLICATION

(11) **EP 4 678 787 A1**
(43) Date of publication of application: **14.01.2026**
(21) Application number: 24187159.9
(22) Date of filing: 08.07.2024
(51) Int. Cl.: C25B 1/04, C10G 2/00, C25B 1/23, C25B 3/26, C25B 9/21, C25B 15/08

(54) **SYSTEMS AND PROCESS FOR INTEGRATION OF LOW TEMPERATURE ELECTROLYSIS OF CARBON DIOXIDE WITH FUEL PRODUCTION**

(71) Applicant: Shell Internationale Research Maatschappij B.V., 2596 HR The Hague (NL)
(72) Inventor: HAN, Kai, 1301 HW Amsterdam (NL)
(74) Representative: Shell Legal Services IP

(57) **Abstract**

This invention provides systems and processes for the production of a hydrocarbon fuel. A gaseous feed comprised of a carbon dioxide rich feedstock, suitably derived from waste exhaust or from direct air capture, is used as an input for a carbon dioxide electrolysis unit. The carbon dioxide electrolysis unit comprises a bipolar membrane and operates under ambient temperature and elevated pressure. The electrolysis unit comprises at least first and second outputs, wherein the first output comprises a first effluent line that comprises a synthesis gas (syngas) product and the second output comprises a second effluent line that comprises a gaseous oxygen byproduct. The first effluent line is coupled to a synthetic production unit that can produce hydrocarbon fuels, such as kerosene or methanol.

## Description

### Field of the Invention

This invention relates to systems and processes that utilise electrolysis of carbon dioxide to produce useful end products.

### Background of the invention

Current methods for producing synthesis gas (syngas) involve feeding carbon dioxide (CO₂) and hydrogen (H₂) into a thermal Reverse Water Gas Shift (RWGS) reactor, where the carbon dioxide in the product stream is separated and reintroduced into the reactor. Despite its advancements, this process encounters significant challenges. It necessitates integrating a high-temperature thermochemical process with a low-temperature electrolyser, leading to substantial capital expenditures (CAPEX) due to the current high cost of green hydrogen (H₂). Additionally, achieving high carbon dioxide conversion efficiency with the thermal RWGS process requires at least two stages, further complicating the system and increasing operational costs.

Electrochemical carbon dioxide conversion (or utilisation) technologies are increasingly attractive due to their flexibility, their ability to address a range of emissions sources (e.g., industrial waste gas and atmosphere) and their fit in an increasingly electrified industry.

It would be advantageous to provide less energy and CAPEX intensive ways to generate syngas, especially from a range of carbon dioxide feedstocks that include direct air capture for use in synthetic processes and, hence, prepare for a fully electrified circular carbon economy. In particular, it is desirable to provide novel processes for the production of sustainable hydrocarbon-based fuels that can be used as drop-in replacements for conventional fossil fuels. For instance, sustainable aviation fuel (SAF) can meet the same specifications as kerosene or naphtha-type conventional jet fuels including Jet A, Jet A-1, JP-5 and JP-8 (kerosene type), or Jet B and JP-4 (naphtha-type), as well as new fuels meeting the ASTM D4054 and D7566 standards.

These and other objectives of the invention will become apparent to the skilled reader, providing a solution to these hitherto unmet needs.

### Summary of the Invention

In a first aspect the present invention provides a system for the production of a hydrocarbon fuel, the system comprising:
a gaseous feed comprised of a carbon dioxide rich feedstock, the feed being in gaseous communication with an input for a carbon dioxide electrolysis unit,
wherein the carbon dioxide electrolysis unit comprises a bipolar membrane and further comprises at least first and second outputs,
wherein the first output comprises a first effluent line that comprises a synthesis gas (syngas) product and the second output comprises a second effluent line that comprises a gaseous oxygen byproduct;
wherein the first effluent line is coupled to a hydrocarbon production unit.

In a second aspect the invention provides a process for the production of a hydrocarbon fuel, the process comprising undertaking an electrolytic reduction of a gaseous carbon dioxide feedstock in a electrolysis unit that comprises a bipolar membrane, in order to produce a gaseous product that comprises hydrogen and carbon monoxide as major components, and formulating a syngas from the hydrogen and carbon monoxide for use as a feedstock in a hydrocarbon synthetic process, wherein the electrolytic reduction is undertaken at a pressure of greater than 3 barg.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### Brief Description of the Drawings

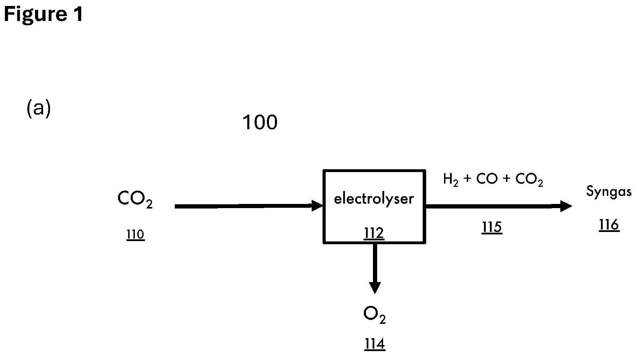

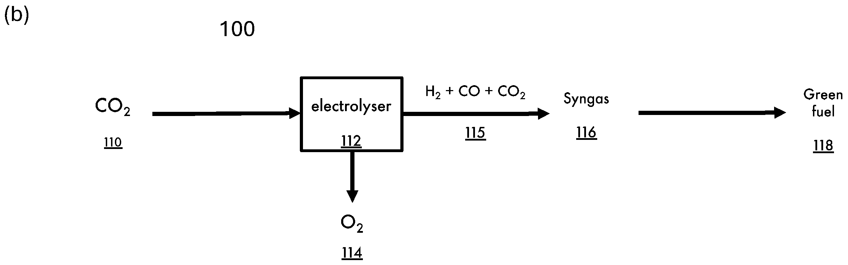

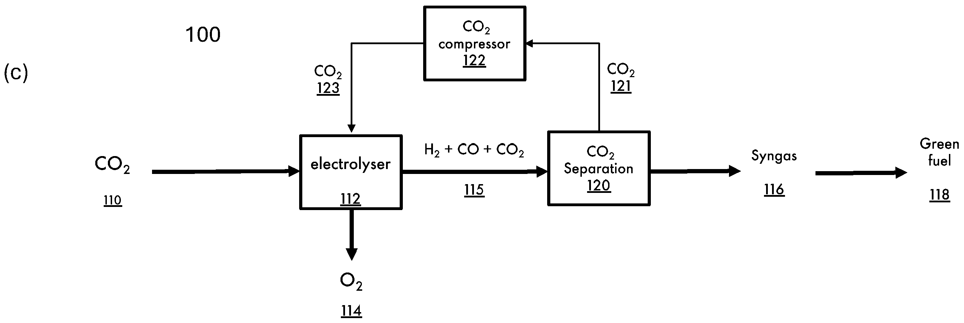

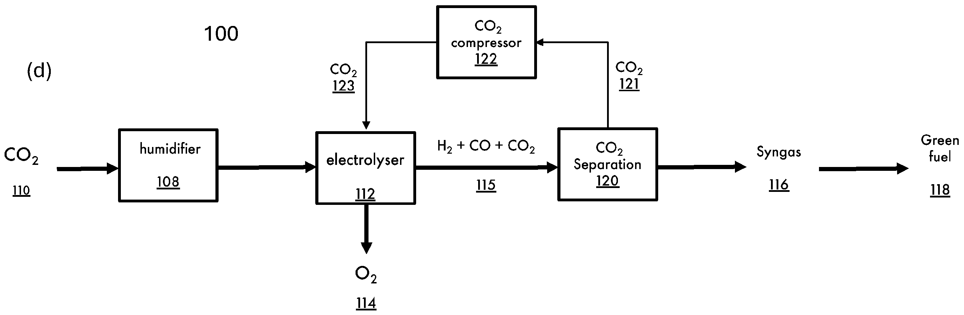

Figure 1 illustrates process line ups according to embodiments of the invention, (a) shows a first simplified embodiment in which a carbon dioxide containing feedstock is used to generate syngas product and O₂ byproduct, (b) shows a second embodiment where the process line up is expanded to include syngas conversion to fuel product, (c) shows an embodiment in which carbon dioxide comprised within the syngas product is subjected to a separation step and recycled for use as a supplementary feedstock, and (d) shows a further expanded embodiment in which feedstock carbon dioxide is humidified prior to input into an electrolyser;

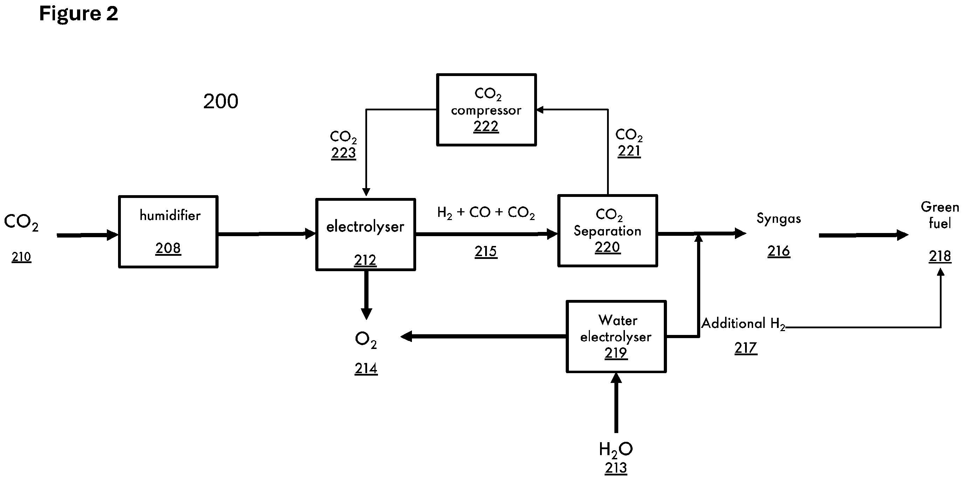

Figure 2 illustrates a process line up according to a further embodiment of the invention in which a water electrolyser is coupled to the process to enable supplementation and control of the hydrogen content within the syngas product line.

### Detailed Description of the Invention

All references cited herein are incorporated by reference in their entirety. Unless otherwise defined, all technical and scientific terms used herein have the same meaning as commonly understood by one of ordinary skill in the art to which this invention belongs.

Prior to setting forth the invention, a number of definitions are provided that will assist in the understanding of the invention.

As used herein, the term 'comprising' means any of the recited elements are necessarily included and other elements may optionally be included as well. `Consisting essentially of' means any recited elements are necessarily included, elements that would materially affect the basic and novel characteristics of the listed elements are excluded, and other elements may optionally be included. `Consisting of' means that all elements other than those listed are excluded. Embodiments defined by each of these terms are within the scope of this invention.

The terms 'feed', 'feedstock' or 'feedstream' should be considered as synonymous. These terms relate to at least one input material or substance that is introduced into a electrolytic cell or a reactor and which is destined for chemical conversion into at least one output effluent of either in the form of a reaction product that contributes to the yield, or as a byproduct such as a waste stream.

As used herein, the term 'renewable energy source' generally refers to one or more technologies that utilize replenishable energy sources such as energy from water, wind, the sun, geothermal sources, and biomass sources such as energy crops. Such renewable energy sources may include without limitation, a wind generator, a solar panel array, solar panel strings, wind turbines, hydroelectric power stations that utilize hydroelectricity and hydropower, solar panels (including solar photovoltaic technology, solar thermal collectors, solar assisted heat pumps and/or solar concentrator technologies), solar arrays (e.g. arrays of solar panels), cogeneration plants that utilize biomass materials, biofuels, biodiesels, geothermal energy, and a combination thereof. Renewable electrons (e⁻) are, thus, components of an electricity supply that is derived from a renewable energy source.

Typically, an electricity supply may be derived from an electrical grid. As used herein the term `electrical grid' or `grid supply' relates to a system for distributing electrical power. As an integrated network, the electricity grid power system comprises a plurality of interconnected components, including but not limited to generators, transformers, transmission lines, and distribution networks. The primary objective of the electricity grid power system is to facilitate the efficient and reliable transmission of electric energy, especially that produced from renewable sources, to end-use applications of the type described herein. Suitably, power grid management may include the capacity for bidirectional power flow, real-time monitoring and various other control mechanisms.

An `electrolysis unit' is used synonymously with the terms 'electrolyser' or `electrolytic cell'. In the context of the present invention electrolysers may be used to achieve electrochemical reduction of feedstocks such as carbon dioxide and/or water. In general, an electrolyser uses electricity to drive an otherwise non-spontaneous chemical reaction. The electricity may comprise renewable electrons.

An electrolysis unit for the electrolysis of carbon dioxide (CO₂) is designed to convert carbon dioxide into useful chemical products using electrical energy, typically electrical energy from renewable sources. The electrolyser unit may also be referred to as an electrochemical cell. This process suitably involves splitting carbon dioxide molecules into carbon monoxide (CO) and oxygen (O₂), as well as water into hydrogen (H₂) and oxygen (Oz). The unit comprises two electrodes - an anode (positive) and a cathode (negative) - immersed in an electrolyte solution. When current is applied, carbon dioxide molecules are reduced at the cathode, forming carbon monoxide or other carbon-based products, while oxygen is released at the anode. Simultaneously, water is split forming hydrogen and more oxygen which is released at the anode. This technology is significant for carbon capture and utilization (CCU) efforts, transforming carbon dioxide, for example, from industrial emissions or direct air capture (DAC) into valuable chemicals and green fuels.

A bipolar membrane (BPM) is a specialized component used in certain types of carbon dioxide electrolysis that can enhance the efficiency and selectivity of the process. It comprises two layers: an anion exchange layer and a cation exchange layer, that are conjoined. A key function of a BPM in carbon dioxide electrolysis is to facilitate the separation and transport of ions, such as preventing crossover of carbon dioxide from cathode to anode, while maintaining distinct pH environments on each side of the membrane. Typically, the BPM is located between the anode and cathode compartments of an electrolysis cell. The cation exchange layer faces toward the cathode, while the anion exchange layer faces toward the anode. When an electric current is applied, water molecules at the junction of the two layers dissociate into hydrogen ions (H⁺) and hydroxide ions (OH⁻). The H⁺ ions move towards the cathode, and the OH⁻ ions move towards the anode. This ion movement creates an acidic environment at the cathode due to the influx of protons and an alkaline environment at the anode due to the influx of OH⁻. These distinct pH zones can be important for optimizing the electrochemical reactions involved in carbon dioxide reduction and oxygen evolution. Carbon dioxide is reduced at the cathode in the acidic environment, producing carbon monoxide (CO), possibly also formic acid (HCOOH), or other hydrocarbons and alcohols, depending on the type of catalyst used. Whilst at the anode water oxidation occurs, generating oxygen (O₂) and maintaining the overall charge balance within the cell. The BPM enhances the efficiency of carbon dioxide electrolysis, such as by minimizing energy losses associated with ion transport and improving the selectivity for desired reduction products, and also preventing crossover of carbon dioxide from cathode to anode. It also helps in managing the competing reactions and side products that can occur in a single pH environment. It has been found that by using a bipolar membrane, carbon dioxide electrolysis units can achieve higher carbon dioxide conversion rates and better product purity, making the process more viable for carbon capture and utilization or in the production of valuable downstream products such as hydrocarbons, typically liquid hydrocarbons, for use in formulation of green fuels.

In a specific embodiment of the present invention, the electrolyser unit may include anode substantially comprised of nickel. The bipolar membrane comprises an anion exchange layer (AEL) and a cation exchange layer (CEL) suitably manufactured using a multilayer-coating production technology. The primary materials used in BPMs may include:

### Anion Exchange Layer (AEL) Materials:

*Quaternized Polymers*: Polymers such as quaternized poly(arylene ether sulfone) (Q-PAES) and quaternized polystyrene. These polymers contain quaternary ammonium groups that facilitate the transport of hydroxide ions (OH⁻).

*Polybenzimidazole (PBI)*: This polymer, often functionalized with quaternary ammonium groups, is known for its thermal and chemical stability.

### Cation Exchange Layer (CEL) Materials:

*Sulfonated Polymers*: Polymers like Nafion (a sulfonated tetrafluoroethylene-based fluoropolymer-copolymer) and sulfonated poly(ether ether ketone) (SPEEK). These materials contain sulfonic acid groups that facilitate the transport of hydrogen ions (H⁺).

BPMs may further comprise additional layers of inorganic materials and/or nanoparticle coatings to improve conductivity, stability, and selectivity. For instance, incorporating silica nanoparticles can enhance mechanical properties and ion transport efficiency.

Between the AEL and CEL is an intermediate layer. The intermediate layer often includes materials that catalyse the dissociation of water into H⁺ and OH⁻ ions, typically when a potential difference of approximately 0.8 to 1.2 V between the ionic layers is reached. Examples include thin films of titania (TiO₂) or other metal oxides, as well as catalysts based on polymers like polyaniline or polypyrrole.

In a specific embodiment of the invention, the electrolyser may comprise silver nanoparticles as the catalyst, suitably silver nanoparticles having an average particle size of less than 100 nm in diameter, optionally wherein at least 99%v of the nanoparticles are no greater than 100 nm in diameter. Incorporating the silver nanoparticle catalyst into the electrolysis system may be carried out in a variety of ways. In one embodiment, silver nanoparticles are sprayed/deposited on the surface of a carbon fiber paper substrate to form an electrode, then the prepared electrode is located together with a BPM within an electrochemical cell. In an alternative embodiment, silver nanoparticles are directly deposited on the surface of the BPM to form a membrane assembly electrode (MEA), the MEA is then used in the electrochemical cell.

In order to enhance mechanical strength and durability, BPMs may incorporate reinforcing woven or nonwoven fabrics or meshes made from materials like polyester, poly(ether ether ketone) (PEEK) and/or polypropylene. These reinforcing structures provide physical support without significantly impeding ion transport.

In a particular embodiment of the invention, suitable BPMs may include fumasep^{®} FBM Bipolar Membrane (FUMATECH BWT GmbH, Bietigheim-Bissingen, Germany).

It has also been found by the present inventors that the selectivity and carbon dioxide conversion of the electrolyser unit is improved by tuning the system pressure. In one embodiment, increased operating pressure within the electrolyser unit allows for increased current density, carbon monoxide selectivity and greater carbon dioxide conversion. In embodiments of the invention, the operating pressure of the electrolyser unit is not less than 3 Barg (Bar gauge), typically not less than 5 Barg, optionally not less than 10 Barg, suitably at least 15 Barg, 20 Barg, 25 Barg, 30 Barg, 40 Barg, 50 Barg, 60 Barg, 70 Barg or more. In a specific embodiment of the invention the operating pressure of the electrolyser unit may be around at least 20 Barg and up to around 60 Barg. An advantage of the present invention is that by operating the electrolyser unit at higher pressures this allows for a level of conservation of energy with downstream hydrocarbon synthesis processes that utilise the syngas output, such as Fischer-Tropsch or methanol-to-jet.

It is an advantage of the system and methods of the invention that the electrolyser unit can operate with high selectivity and carbon dioxide conversion at ambient temperatures, suitably around 20 degrees Celsius and up to 40 degrees Celsius. This reduces the cell voltages and the need to heat the electrolyser, thus minimising power consumption.

Electrolyser units of the type exemplified will run at an optimal operating current density across the membrane. The current density may be linked to the size of the membrane within a given electrolyser cell that comprises a BPM. Typically, a current density of greater than 100 mA/cm² is utilised, higher current densities may also be used of at least 150, 200, 250, 300, 350, 400, 450, 500, 550, 600, 650, 700, and 750 mA/cm². In a specific embodiment an operating current density across the membrane of at least 1 A/cm² and even up to around 2 A/cm² are used.

In certain instances, there can be incomplete conversion of the carbon dioxide reactants by the electrolyser unit, hence, it is beneficial to separate the unreacted carbon dioxide from other gaseous products (e.g. hydrogen and CO) and recycle it back to the upstream electrolytic process. Thus, the overall conversion of carbon dioxide can be increased. In embodiments of the invention a carbon dioxide separation/capture unit is provided downstream of an electrolyser unit. In one embodiment the carbon dioxide capture unit comprises an Amine-based Deep Absorption Process - eXtended (ADIP-X). The ADIP-X unit employs an advanced amine-based solvent that provides superior carbon dioxide absorption performance of greater than 90% capture compared to conventional amines (see Meerman et al. (2012) Int. J. Green. Gas. Cont. 9:160-171). The process involves the absorption of carbon dioxide in a contactor where the gaseous output stream from the electrolyser unit is treated with the ADIP-X solvent (a mixture of methyldiethanolamine and piperazine in water). The carbon dioxide-rich solvent is then regenerated in a stripper column, where the absorbed carbon dioxide is released and the lean solvent is recycled back to the contactor. This cyclic process ensures high carbon dioxide capture efficiency and solvent recovery. The carbon dioxide isolated from the electrolyser unit output stream is recycled to the input of the electrolyser unit. Alternatives to ADIP-X may include pressure swing adsorption (PSA) approaches for carbon capture.

Syngas, short for synthesis gas, is a mixture of gases primarily composed of carbon monoxide (CO) and hydrogen (H₂). It is a versatile intermediate product that has a wide range of applications in various industrial processes. Syngas can be produced via the electrolytic reduction of carbon dioxide. Syngas can be used for a diverse range of synthetic processes including, but not limited to: ammonia production; methanol production, including methanol-to-jet; hydrogen (H₂) production such as via a water gas shift (WGS) reaction; Fischer-Tropsch Synthesis; and in the process of Carbon Capture and Sequestration (CCS). Hence, the versatility of syngas makes it a valuable component in the production of various industrial chemicals, including ethylene and a variety of sustainable hydrocarbon fuels.

According to a specific embodiment of the present invention a syngas stream is manufactured by the electrolytic reduction of carbon dioxide. The syngas may be fed directly to a paraffin production unit in the form of a Fisher Tropsch process. Alternatively, the syngas stream may be subject to additional modification or conditioning, such as be adding additional hydrogen to the syngas stream. Hydrogen may be produced from the electrolytic reduction of water, also powered by renewable electricity where possible. The well-known Fischer Tropsch process comprises passing of a syngas over a catalyst, typically cobalt or iron-based, in a Fischer-Tropsch reactor. Under high temperatures and pressures, the catalyst facilitates the polymerization of carbon monoxide and hydrogen into longer-chain hydrocarbons, resulting in paraffinic products such as liquid fuels including diesel, kerosene, and naphtha, along with gaseous and waxy by-products. The primary liquid products from the Fischer Tropsch reactor may be further refined through hydrocracking and distillation. Hydrocracking breaks down heavier hydrocarbons into lighter, more valuable fractions. Distillation then separates these fractions into finished products like diesel, aviation fuel, and lubricants. It is of significant advantage that according to embodiments of the invention the source of carbon dioxide for the process is either from industrial waste exhaust or from DAC, which when combined with the use of renewable electricity to power some or all of the process, enables the production of non-fossil based fuels, such as aviation fuel.

An alternative to the Fischer Tropsch process involves methanol-to-jet (MTJ) technology. Syngas can be reacted to form methanol which is then converted into olefins through a process known as methanol-to-olefins (MTO), typically by utilising zeolite catalysis (e.g. using ZSM-22, ZSM-23 or ZSM-57) at a pressure of at least around 30 barg and a temperature of more than 100 degrees Celsius, to facilitate the conversion of methanol into light olefins like ethylene and propylene. These olefins are then transformed into hydrocarbons suitable for jet fuel through a combined catalytic hydrogenation and oligomerization step, referred to as hydro-oligomerization (Hydro-OLI). the hydro-OLI step is a dimerization, optionally also trimerization, and thereby a single reactor is operated at a pressure of around 15-60 barg. The hydro-OLI step is typically conducted by reacting, in the presence of hydrogen, the olefin stream over a catalyst comprising a hydrogenation metal, such as those selected from Pd, Rh, Ru, Pt, Ir, Re, Cu, Co, Mo, Ni, W and combinations thereof, suitably incorporated in a zeolite. Hydrogen may be provided for this step through the parallel hydrolysis of water.

This MTJ process allows for high yields of jet fuel-range hydrocarbons to be produced while maintaining flexibility to use a mix of alcohols as feedstock and potentially produce renewable diesel and other low-carbon chemical feedstocks.

According to embodiments of the invention processes for the production of a hydrocarbon fuel, such as a paraffinic fuel or methanol. The process comprises undertaking an electrolytic reduction of a gaseous carbon dioxide feedstock in an electrolysis unit that comprises a bipolar membrane substantially as described above in relation to the systems of the invention. The process results in production of a gaseous product that comprises hydrogen and carbon monoxide as major components, and allows for the formulation of a syngas from the hydrogen and carbon monoxide for use as a feedstock in downstream hydrocarbon synthetic processes. In accordance with specific embodiments the process involves electrolytic reduction of carbon dioxide at a pressures of greater than 3 barg, suitably greater than 10 barg, and upwards of 20 barg, and/or substantially at pressures that are in accordance with or correspond substantially to the operating pressures of downstream synthetic processes including FT and/or methanol synthesis and/or MTJ.

### Detailed Description of the Drawings

Figure 1 (a) shows a process line up for a system 100 according to a first embodiment of the invention. A source of carbon dioxide 110 is provided as a feedstock to an input for an electrolyser unit 112. The electrolyser unit 112 comprises a BPM and provides for electrolytic reduction of the carbon dioxide to provide outputs of O₂ 114 as by product and a product stream 115 comprising hydrogen, carbon monoxide and any unreacted carbon dioxide. The O₂ 114 may be liquified and used for other processes or vented to the atmosphere. The hydrogen and carbon monoxide contribute to a syngas stream 116 which may be utilised as a feedstock for downstream synthetic reactions.

In Figure 1(b) the system 100 is expanded to couple the process line up as described in Figure 1(a) to a downstream synthetic reactor intended for the production of so-called 'green fuel' 118. In this embodiment syngas 116 may be utilised in synthetic processes including for methanol (MeOH) production, including MTJ; hydrogen ( H₂ ) production, such as via a water gas shift (WGS) reaction; and or Fischer-Tropsch (FT) Synthesis of paraffinic hydrocarbons. MTJ and/or FT paraffinic fractions that comprise kerosene may be combined for use in sustainable aviation fuels, for example.

A carbon dioxide separation unit is included in an embodiment of the system 100 that is shown in Figure 1 (c). The system 100 as depicted in Figures 1(a) and (b) is expanded further to include a carbon dioxide separation unit 120 that receives the product stream 115 comprising hydrogen, carbon monoxide and any unreacted carbon dioxide. carbon dioxide 121 is separated from the product stream 115 and recycled to the electrolyser unit 112. The recycled carbon dioxide stream 121, 123 may passed through a compressor unit 122 in order to elevate the pressure to operating pressure levels within the electrolyser unit 112. The product stream from the carbon dioxide separation unit 120 is enriched in hydrogen and carbon monoxide that forms the syngas stream 116 utilised in downstream synthetic reactions as described previously.

Figure 1(d) shows a system 100 which further includes a humidifier unit 108 that pretreats the carbon dioxide feed 110 prior to input into the electrolyser unit 108. In an alternative embodiment the recycled carbon dioxide stream 123 may be combined with the feedstream 110 before the humidifier 108. In a further embodiment the carbon dioxide compressor unit 122 may include a humidifier function.

In Figure 2, a process line up for a system 200 according to a second embodiment of the invention is shown. In this embodiment the system 200 further comprises a means for moderating or controlling the composition of the syngas 216 via an additional source of hydrogen which may be from a water electrolysis unit 219. Water 213 is introduced as a feed into water electrolysis unit 219 whereupon it is subjected to electrolytic reduction to generate a hydrogen product stream 217 and an oxygen byproduct stream 214. The hydrogen product stream 217 may be combined with the syngas 216 and utilised in downstream synthetic reactions as described previously. Alternatively, the hydrogen may be used in downstream hydrogenation reactions involved in the production of paraffinic hydrocarbon fuels, e.g. FT or MTJ.

The invention will now be further illustrated by reference to the following non-limiting examples.

### Examples

Electrochemical measurements were conducted using a zero-gap flow type electrolyzer controlled by a potentiostat (Autolab, Metrohm). Specifically, four different electrolyzer sizes were utilized: 5 cm², 25 cm², 100 cm² and 250 cm². The 5 cm² electrolyser is a standard electrochemical cell from Dioxide materials, the pressurized 5 cm² cell is a customized electrolyser . The 25 cm²,100 cm² electrolyser are commercially available (purchased from Hydron Energy B.V., the Netherlands) As was the 250 cm² electrolyser (purchased from Fuel Cell Energy).

In general, Ni foam was used as anode and a bipolar membrane (Fumasep^{™} BPM) to seperate the anode and cathode. The anolyte was 1 M KOH solution and circulated to the anode compart by a peristaltic pump, the flow rate was 1 mlₙ min⁻¹ cm⁻², 2 mlₙ min⁻¹ cm⁻², 1.5 mlₙ min⁻¹ cm⁻² and 0.9 mlₙ min⁻¹ cm⁻² for the 5 cm², 25 cm², 100 cm² and 250 cm² electrolysers, respectively.

Humidified CO₂ was flowing into the cathode compartment at a certain flow rate, which was 1 mlₙ min⁻¹ cm⁻², 1 mlₙ min⁻¹ cm⁻², 1 mlₙ min⁻¹ cm⁻² and 1 mlₙ min⁻¹ cm⁻² for the 5 cm², 25 cm², 100 cm² and 250 cm² electrolysers (based on the active electrode area), respectively.

In this Example, a bubbling through humidification method was used for the non-pressurized and pressurized 5 cm² electrolyser and a Bronkhorst Controlled Evaporation Mixer humidification system for the larger electrolysers (25, 100, 250 cm²). For the Bronkhorst Controlled Evaporation Mixer (CEM) system, pressure, temperature and flow of the gas determine the required liquid input to achieve a value for relative humidity. The CEM regulates the water dosing and evaporation in the gas stream. The obtained humidity is validated by a EE33 Relative humidity sensor (E+E). Typically, humidity was controlled at 30% for both experiments. The electrochemical measurement was conducted by applying different current densities, temperatures and pressure, the applied pressure is gauge pressure (Barg) in all the experiments. All cell voltages reported in this work were the actual measured values without any iR correction.

**Table 1**

| **Experimental data** | | |
|---|---|---|
| | CO₂-CO | CO₂-syngas |
| Temperature (°C) | 25 | 25 |
| Pressure (barg) | 0-10 | 0-10 |
| Catalysts | Ag | Ag |
| Membrane | BPM | BPM |
| Current density (mA/cm²) | 100 | 100 |
| FEco (%) | 95 | 60 |
| Cell Voltage (V) | 3.5 | 3.5 |
| EEco (%) | 33 | 25 |
| Syngas ratio | Tuneable | Tuneable |
| Electrode size (cm²) | 100 | 250 |
| CO₂ single-pass conversion (%) | 70 | 70 |

Although particular embodiments of the invention have been disclosed herein in detail, this has been done by way of example and for the purposes of illustration. The aforementioned embodiments are not intended to be limiting with respect to the scope of the appended claims, which follow. It is contemplated by the inventors that various substitutions, alterations, and modifications may be made to the invention without departing from the spirit and scope of the invention as defined by the claims.

## Claims

1. A system for the production of a hydrocarbon fuel, the system comprising:
a gaseous feed comprised of a carbon dioxide rich feedstock, the feed being in gaseous communication with an input for a carbon dioxide electrolysis unit,
wherein the carbon dioxide electrolysis unit comprises a bipolar membrane and further comprises at least first and second outputs,
wherein the first output comprises a first effluent line that comprises a synthesis gas (syngas) product and the second output comprises a second effluent line that comprises a gaseous oxygen byproduct;
wherein the first effluent line is coupled to a hydrocarbon production unit.

2. The system of claim 1, wherein the hydrocarbon production unit comprises a Fischer-Tropsch synthesis reactor.

3. The system of claim 1, wherein the hydrocarbon production unit comprises a methanol synthesis reactor, and optionally also a methanol-to-jet synthesis reactor.

4. The system of any one of claims 1 or 2, wherein the carbon dioxide electrolysis unit operates under a pressure of at least 3 Barg (Bar Gauge), typically not less than 10 Barg, optionally not less than 20 Barg, suitably not less than 60 Barg.

5. The system as claimed in any of Claims 1 to 4, wherein the gaseous feed comprises carbon dioxide that is obtained from industrial waste exhaust or from direct air capture (DAC).

6. The system as claimed in any of Claims 1 to 5, wherein the electrolysis unit is partially or fully powered by renewable electricity.

7. The system of any one of claims 1 to 6, wherein the bipolar membrane has an applied current density of greater than 100 mA/cm², suitably greater than 500 mA/cm², optionally not less than 1 A/ cm².

8. The system of any one of claims 1 to 7, wherein the carbon dioxide electrolysis unit is operated at a temperature of below 40 degrees Celsius.

9. The system of any one of claims 1 to 8, wherein the syngas composition is adjusted upstream of the hydrocarbon production unit.

10. The system of claim 9, wherein the syngas product is supplemented with additional hydrogen, optionally wherein additional hydrogen is obtained from a water electrolysis unit in gaseous communication with the second effluent line.

11. The system of any one of claim 1 to 10, wherein the first effluent line is directed to a carbon dioxide separation unit located upstream of the hydrocarbon production unit and wherein the carbon dioxide obtained from the carbon dioxide separation unit is recycled to the carbon dioxide electrolysis unit, optionally wherein the carbon dioxide separation unit comprises an ADIP-X unit.

12. The system of any one of claims 1 to 11, wherein carbon dioxide electrolysis unit comprises a silver nanoparticle catalyst.

13. The system of any one of claims 1 to 12, wherein the hydrocarbon fuel isa sustainable aviation fuel that comprises:
a. kerosene; and/or
b. Methanol.

14. A process for the production of a hydrocarbon fuel, the process comprising undertaking an electrolytic reduction of a gaseous carbon dioxide feedstock in a electrolysis unit that comprises a bipolar membrane, in order to produce a gaseous product that comprises hydrogen and carbon monoxide as major components, and formulating a syngas from the hydrogen and carbon monoxide for use as a feedstock in a hydrocarbon synthetic process, wherein the electrolytic reduction is undertaken at a pressure of greater than 3 barg.

15. The process of claim 15, wherein the hydrocarbon synthetic process, comprises a Fischer Tropsch process and/or a methanol-to-jet process.
